# EUROPÄISCHE PATENTSCHRIFT

(11) **EP 2 614 193 B1**
(45) Veröffentlichungstag und Bekanntmachung des Hinweises auf die Patenterteilung: **08.07.2015**
(21) Anmeldenummer: 11720487.5
(22) Anmeldetag: 19.05.2011
(51) Int. Cl.: E04B 1/80, F16L 59/065

(54) **WÄRMEDÄMMELEMENT UND HERSTELLUNGSVERFAHREN DAFÜR**
HEAT-INSULATING ELEMENT AND PRODUCTION METHOD THEREFOR
ÉLÉMENT D'ISOLATION THERMIQUE ET PROCÉDÉ DE FABRICATION

(30) Priorität: 10.09.2010 DE 102010040557
(43) Veröffentlichungstag der Anmeldung: 17.07.2013
(73) Patentinhaber: BSH Hausgeräte GmbH, 81739 München (DE)
(72) Erfinder: STELZER, Jörg, 89537 Giengen (DE); SEELMEIER, Michael, 73572 Heuchlingen (DE); PATCHALA, Dasaradh Kumar, 89231 Neu-Ulm (DE); EHNINGER, Christian, Giengen 89537 (DE)
(86) Internationale Anmeldenummer: PCT/EP2011/058116
(87) Internationale Veröffentlichungsnummer: WO 2012/031789

(56) Entgegenhaltungen:
- EP-A1- 0 396 961
- DE-A1- 10 058 566
- US-A- 4 662 521
- US-A- 5 273 801

## Beschreibung

Die vorliegende Erfindung betrifft ein Verfahren zur Herstellung eines Wärmedämmelements, das mit dem Verfahren erhältliche Wärmedämmelement sowie dessen Verwendung.

Sogenannte Vakuumisolationspaneele sind als Wärmedämmelement seit langem bekannt. Sie umfassen herkömmlicherweise einen hochporösen, unter Vakuum zwischen zwei diffusionsdichten Kunststofffolien eingeschlossenen Füllkörper. Ein solcher Füllkörper kann aus einem Block festen Materials auf Maß zugeschnitten und dann mit den Folien ummantelt werden. Auf diese Weise kann ein Vakuumisolationspaneel mit einfacher Platten- oder Quadergestalt mit guter Genauigkeit gefertigt werden, doch ist der Arbeitsaufwand beim Zuschneiden der Stützkörper hoch, so dass derartige Vakuumisolationspaneele nicht zu Kosten bereitgestellt werden können, die einen wirtschaftlichen Einsatz beim Bau von Haushaltskältegeräten ermöglichen.

Ein einfacherer und preiswerterer Ansatz ist, die Füllkörper von Vakuumisolationspaneelen aus einem körnigen, schüttfähigen Material zu fertigen. Dies macht den Schritt des Zuschneidens des Stützkörpers überflüssig, und da kein Verschnitt entsteht, sind die Materialkosten relativ gering. Die notwendige Festigkeit des Vakuumisolationspaneels ergibt sich dadurch, dass die Partikel des Stützmaterials unter dem von außen auf die Folien wirkenden Atmosphärendruck fest aneinander gepresst werden. Dabei ergibt sich jedoch das Problem, dass ein pulverförmiges Füllmaterial sich beim Einfüllen in einen Folienbeutel auch an Oberflächenbereichen des Beutels absetzt, die vorgesehen sind, um nach dem Evakuieren miteinander verschweißt zu werden, was die Gefahr einer unzureichenden Dichtigkeit der Schweißung erheblich erhöht.

Aus US 5 273 801 ist der Vorschlag bekannt geworden, das Füllmaterial in einen Beutel aus porösem Flachmaterial zu verpacken, den Beutel in einen Behälter einzulegen und den evakuierten Behälter zu versiegeln. Der Beutel macht es schwierig, das Füllmaterial im Behälter gleichmäßig bis in seine Ecken hinein zu verteilen.

Ein wichtiger Nachteil der mit schüttfähigem Stützmaterial realisierten Vakuumpaneele ist ihre geringe Maßhaltigkeit. Da die Hülle eines solchen Paneels unter Vakuum versiegelt werden muss, wird das Paneel, wenn nach dem Versiegeln dem von außen einwirkenden Atmosphärendruck kein Innendruck mehr entgegenwirkt, durch den.Atmosphärendruck gestaucht, wobei das Ausmaß der Stauchung von der Dichte der Schüttung des Stützmaterials abhängt und daher von einem Paneel zum anderen variieren kann. Um mit solchen Vakuumisolationspaneelen ein maßhaltiges Wärmedämmelement zu bilden, ist es daher gebräuchlich, das Vakuumpaneel in einen größeren, maßgenauen Hohlkörper einzubauen und diejenigen Bereiche des Hohlkörpers, die nicht durch das Vakuumisolationspaneel ausgefüllt sind, auszuschäumen. Die Isolationswirkung des dafür gebräuchlichen Schaumes ist schlechter als die des Vakuumisolationspaneels, so dass in einem kombinierten Wärmedämmelement, das ein Vakuumisolationspaneel und ausgeschäumte Bereiche enthält, ein ausgeschäumter Bereich, der sich neben einem Vakuumisolationspaneel zwischen einer warmen und einer kalten Seite erstreckt, als Wärmebrücke wirken kann. Die Dämmwirkung derartiger kombinierter Wärmedämmelemente ist daher im Allgemeinen der eines reinen Vakuumisolationspaneels unterlegen.

Aufgabe der vorliegenden Erfindung ist, ein Verfahren zu schaffen, mit dem Wärmedämmelemente, die Vakuum zur Wärmedämmung nutzen, einfach und preiswert mit hoher Qualität erzeugt werden können.

Die Aufgabe wird gelöst durch ein Verfahren zur Fertigung eines Wärmedämmelements mit den Merkmalen des Anspruchs 1.

Die Verwendung des luftdurchlässigen Beutels behindert nicht wesentlich das Evakuieren des Stützmaterials, da Luft aus dem Stützmaterial durch die Wände des Beutels hindurch großflächig austreten kann, sie verhindert aber, dass sich Staub des Stützmaterials an für die Versiegelung relevanten Oberflächen des Behälters absetzt.

Auch ein Verdichten des Stützmaterials im Behälter ist möglich, ohne dass dadurch Stützmaterial auf die Versiegelungsflächen gelangt.

Mit einem starrwandigen Behälter können nicht nur einfache quader- oder plattenförmige Vakuumisolationselemente erhalten werden, sondern auch solche mit komplexerer Gestalt und insbesondere mit konkaven Querschnittsformen.

Der Behälter kann zweckmäßigerweise durch Tiefziehen aus einem geeigneten Flachmaterial, insbesondere einem Verbundmaterial, erzeugt werden.

Ein solcher durch Tiefziehen geformter Behälter hat im Allgemeinen rings um eine Konkavität, die mit dem Stützmaterial aufgefüllt werden kann, einen umlaufenden Flansch, der während des Tiefziehens zum Fixieren des Behälters gedient hat. Ein solcher umlaufender Flansch kann zweckmäßigerweise dazu genutzt werden, nach Einfüllen des Stützmaterials an ihm einen Deckel anzuschweißen, um den Behälter zu versiegeln.

Der umlaufende Flansch kann nach dem Versiegeln beschnitten werden, um das Vakuumisolationselement auf Abmessungen zu bringen, die dessen Weiterverarbeitung ermöglichen.

Wenn der im Wesentlichen flache Deckel nachgiebiger als der Behälter ist, kann eine Verformung des Vakuumisolationselements in der Ebene, in der sich Deckel und Behälter berühren, weitestgehend dadurch vermieden werden, dass der Deckel quer zu der Ebene nachgibt. Das Vakuumisolationselement erfährt daher durch das Evakuieren in besagter Ebene, wenn überhaupt, nur eine geringe Stauchung. Die Abmessungen des Vakuumisolationselements sind daher gut reproduzierbar, was dessen weitere Verwendung erleichtert.

Insbesondere kann das Vakuumisolationselement mit wenigstens einem weiteren Dämmkörper zusammengefügt werden, um ein vollständiges Wärmedämmelement zu bilden.

Da aufgrund der verschiedenen oben beschriebenen Maßnahmen wie Verdichten des Stützmaterials, Verwendung eines starrwandigen Behälters etc. die Neigung des Vakuumisolationselements zur Verformung unter Atmosphärendruck gering ist, können einander gegenüberliegende Oberflächen des Behälters am Wärmedämmelement freiliegen, ohne das dies die Maßhaltigkeit des Wärmedämmelements nennenswert beeinträchtigt. Daher kann vermieden werden, dass der weitere Dämmkörper, wenn er schlechtere Dämmeigenschaften als Vakuumisolationselement aufweist, eine Wärmebrücke bildet.

Das Wärmedämmelement ist als Tür eines Kältegerätes, insbesondere eines Haushaltskältegerätes einsetzbar. Hier hat die Kombination des Vakuumisolationselements mit dem weiteren Dämmkörper den Vorteil, dass Scharnierbuchsen, Schrauben oder andere Mittel zur Befestigung von Beschlagteilen oder dergleichen in den weiteren Dämmkörper eingreifen können, ohne die Dichtigkeit des Vakuumisolationselements zu gefährden.

Erfindungsgegenstand ist daher auch das mit dem oben beschriebenen Verfahren hergestellte Wärmedämmelement sowie ein Kältegerät, insbesondere ein Haushaltskältegerät, das ein solches Wärmedämmelement als Tür verwendet. In einem solchen Kältegerät bildet der Behälter vorzugsweise eine einer Lagerkammer zugewandte, innere Wand des Gehäuseteils.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der

Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1 bis 4: verschiedene Schritte der Fertigung einer Innenwand einer Kältegerätetür durch Tiefziehen;
- Fig. 5: einen ersten Schritt des Ausfüllens eines Hohlraums der gemäß Fig. 1 bis 4 erhaltenen Innenwand gemäß einer ersten Ausgestaltung der Erfindung;
- Fig. 6: einen zu Fig. 5 analogen Schritt gemäß einer zweiten Ausgestaltung der Erfindung;
- Fig. 7: das Verdichten des Stützmaterials in dem Hohlraum;
- Fig. 8: das Anbringen eines Deckels;
- Fig. 9: einen Teilschnitt durch ein mit dem Verfahren erhaltenes Vakuumisolationspaneel;
- Fig. 10: einen Teilschnitt durch das in einer Kältegerätetür montierte Vakuumisolationspaneel; und
- Fig. 11: einen zu Fig. 10 analogen Teilschnitt gemäß einer abgewandelten Ausgestaltung.

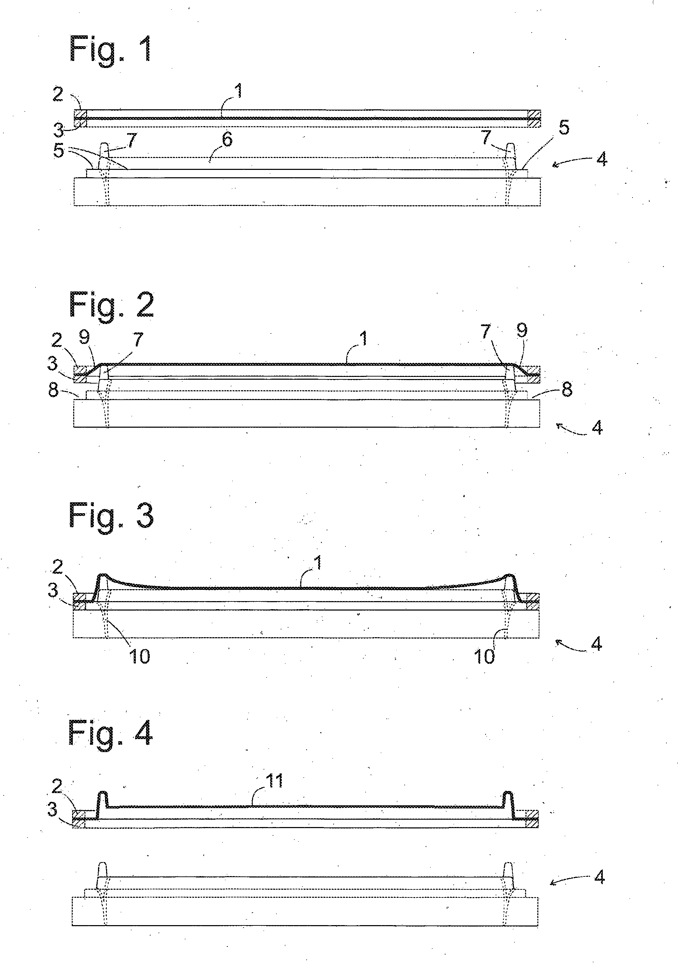

Fig. 1 zeigt einen ersten Schritt der Fertigung einer Tür für ein Haushaltskältegerät gemäß der vorliegenden Erfindung in einer Seitenansicht bzw. im Schnitt. Ein rechteckiger Zuschnitt 1 aus Kunststoff-Flachmaterial ist zwischen einem oberen und einem unteren Rahmenteil 2, 3 eingeklemmt gehalten. Der Zuschnitt 1 kann aus einem homogenen thermoplastischen Kunststoffmaterial bestehen, das in einem späteren Fertigungsschritt mit einer diffusionsdichten Schicht versehen wird; vorzugsweise handelt es sich um ein Verbundmaterial, bei dem eine diffusionsdichte Folie zwischen Schichten aus thermoplastischen Material eingebettet ist.

Unterhalb des Zuschnitts 1 und der Rahmenteile 2, 3 ist eine Tiefzieh- oder Thermoforming-Form 4 gezeigt. Die Form 4 ist vorgesehen, um mit ihrer Hilfe eine Innenwand einer Kältegerätetür von an sich bekannter Gestalt zu formen, und dementsprechend weist sie einen an vier Seiten eben umlaufenden Randbereich 5, einen von dem Randbereich 5 umgebenen flachen Vorsprung 6 und, an zwei Seiten des Vorsprungs 6, Rippen 7 auf. Der Randbereich 5 ist vorgesehen, um einen umlaufenden ebenen Flansch der Innenwand zu formen, der im fertigen Kältegerät eine an einer Vorderseite des Korpus anliegende Dichtung trägt. Der Vorsprung 6 ist vorgesehen, um einen Vorsprung der Innenwand abzuformen, der beim fertigen Kältegerät zwischen die Seitenwände des Korpus eingreift, und die Rippen 7 formen Holme ab, die an der fertigen Innenwand ins Innere des Kältegerätes vorspringen und zur Befestigung von Türabstellern dienen.

Der zwischen den Rahmenteilen 2, 3 geklemmte und in einen plastisch verformbaren Zustand erhitzte Zuschnitt 1 wird gegen die Form 4 abgesenkt und kommt dabei zunächst, wie in Fig. 2 zu sehen, mit den Spitzen der Rippen 7 in Kontakt. Während sich die Rahmenteile 2, 3 weiter nach unten, in Richtung einer den Randbereich 5 umgebenden Aussparung 8 der Form 4, bewegen, beginnt eine Streckung des Zuschnitts 1 auf einem sich zwischen den Rippen 7 und zu diesen benachbarten Leisten der Rahmenteile 2, 3 erstreckenden Streifen 9.

In Fig. 3 haben die Rahmenteile 2, 3 eine Anschlagstellung erreicht, in der das untere Rahmenteil 3 in der Aussparung 8 der Form 4 aufgenommen ist und im Wesentlichen luftdicht an die Form 4 anschließt. Über Kanäle 10 wird die zwischen der Form 4 und dem Zuschnitt 1 eingeschlossene Luft abgesaugt, sodass der Zuschnitt 1 sich eng an die Form 4 anschmiegt.

Fig. 4 zeigt die auf diese Weise aus dem Zuschnitt 1 geformte Innenwand 11, abgehoben von der Form 4.

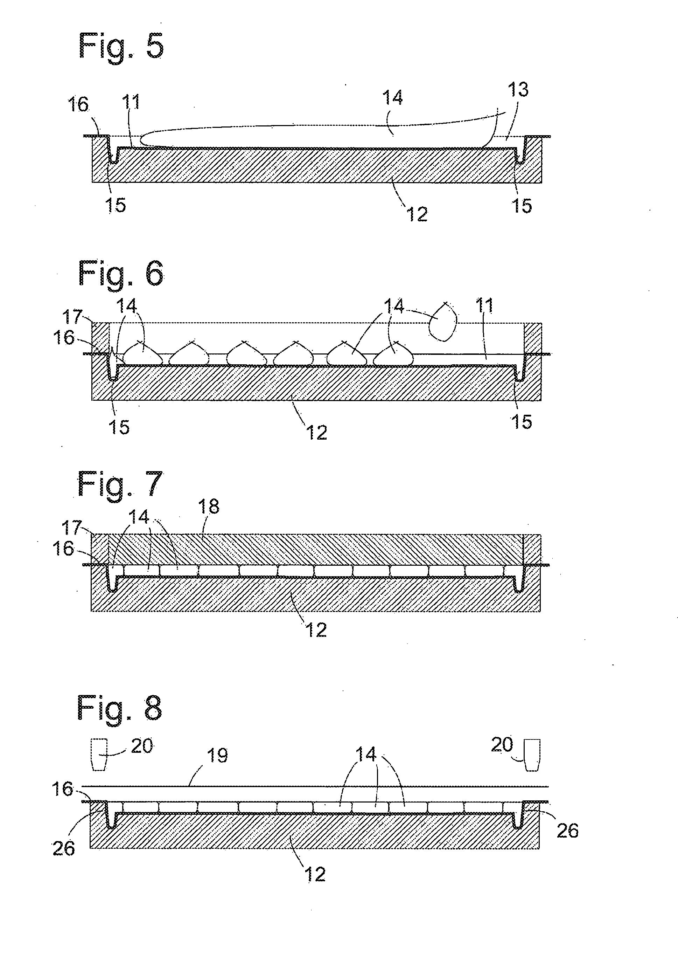

Als nächstes wird die Innenwand 11 in einer zu der Form 4 komplementär geformten Stützform 12 platziert, wie in Fig. 5 gezeigt. Der zuvor von dem flachen Vorsprung 6 der Form 4 ausgefüllte Hohlraum 13 der Innenwand 11 ist nun nach oben gekehrt und liegt offen. In den Hohlraum 13 wird ein mit einem schüttfähigen porösen Stützmaterial wie etwa Kieselerde gefüllter Beutel 14 eingelegt. Die Wände des Beutels 14, aus einem Vlies oder einem dichten Gewebe, sind durchlässig für Luft, nicht aber für die Partikel des Stützmaterials.

Damit das Stützmaterial den Hohlraum 13 einschließlich der Holme 15 an dessen Seiten ausfüllt, wird der Beutel durch einen geeigneten Stempel angedrückt.

Eine in Fig. 6 gezeigten Alternative zufolge kann der Hohlraum 13 auch mit einer Vielzahl von kleinen Beuteln 14 aufgefüllt werden. Dies bietet den Vorteil, dass jeweils ein Beutel unmittelbar an den Holmen 15 platziert und, sofern er nicht von allein in den Holm 15 hineinrutscht, durch einen von oben einwirkenden Stempel hineingedrückt werden kann, ohne dass dafür das Stützmaterial in dem Hohlraum 13 in nennenswertem Umfang horizontal verschoben werden müsste.

Auf einen sich rings um den Hohlraum 13 erstreckenden, am Randbereich 5 der Form 4 geformten Flansch 16 der Innenwand 11 ist ein Rahmen 17 aufgesetzt, der den Beutel 14 von dem Flansch 16 fernhält.

In der Darstellung der Fig. 7 ist von oben in den Rahmen 17 ein Stempel 18 eingeführt, um die Beutel 14 bis auf die Höhe des Flansches 16 flachzudrücken und so das Stützmaterial zu verdichten und es dazu zu zwingen, die Holme 15 vollständig auszufüllen. Der Rahmen 17 verhindert, dass Beutel 14 dem Druck des Stempels 18 seitwärts, auf den Flansch 16, ausweichen.

Auf die in dieser Weise erhaltene bündige ebene Oberfläche des Flansches 16 und der Beutel 14 wird, wie in Fig. 8 gezeigt, eine diffusionsdichte Folie 19 aufgelegt und mittels eines geeigneten Werkzeugs 20 an dem Flansch 16 verschweißt. Das Auflegen und Verschweißen der Folie 19 kann vollständig unter Vakuum stattfinden. Denkbar ist auch die Folie 19 zunächst unter Atmosphärendruck aufzulegen und am Flansch 16 teilweise, z.B. entlang von drei seiner vier Seiten, zu verschweißen, erst dann den Hohlraum 12 zu evakuieren und danach die Verschweißung der Folie 19 am Flansch 16 zu vervollständigen.

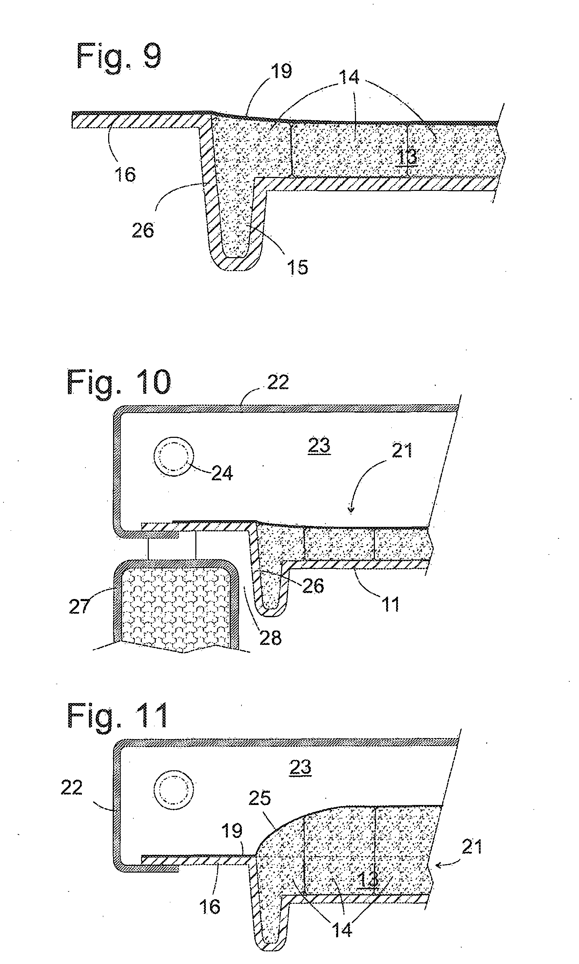

Die Vorverdichtung des Stützmaterials in den Beuteln 14 durch den Stempel 18 führt dazu, dass das Stützmaterial allenfalls noch geringfügig weiter nachgibt, wenn nach dem Evakuieren des Hohlraums 13 der Atmosphärendruck über die Folie 19 auf ihm lastet. Da die Folie 19 nachgiebiger ist als die Innenwand 11, ist es im Wesentlichen nur die Folie, die sich unter dem Atmosphärendruck verformt und sich, wie in dem Teilschnitt der Fig. 9 gezeigt, mit einer leicht konkaven Krümmung über den Hohlraum 13 und die darin eingeschlossenen Beutel 14 spannt. Dadurch wird das Stützmaterial, falls noch erforderlich, genau so weit nachverdichtet, dass es die Innenwand 11 gegen den Atmosphärendruck wirksam aussteifen kann und diese keine nennenswerte nachträgliche Verformung und insbesondere keine ihre Weiterverarbeitung erschwerende Wölbung erfährt. Insbesondere bewirkt das Evakuieren keine signifikante Änderung des Abstandes zwischen einander gegenüberliegenden Seitenwänden 26 des Hohlraums 13, so dass , wenn dieser beim fertig montierten Kältegerät, wie in Fig. 10 gezeigt, zwischen Seitenwände 27 des Korpus eingreift, eine reproduzierbar geringe Breite eines Spaltes 28 zwischen den Seitenwänden 26 und den Seitenwänden 27 des Korpus erhalten werden kann.

Der Flansch 16 ist einige Zentimeter breit und kann daher an seinen Rändern beschnitten werden, um das so erhaltene Vakuumisolationselement auf ein für seine weitere Verwendung geeignetes Maß zu bringen, ohne dadurch die Dichtigkeit der Verbindung zwischen Flansch 16 und Folie 19 zu gefährden.

Fig. 10 zeigt das so erhaltene Vakuumisolationselement, hier zusammenfassend mit 21 bezeichnet, angefügt an eine Außenhaut 22 einer Kältegerätetür. Die Außenhaut 22 kann in fachüblicher Weise aus Blech geformt sein. Der von der Außenhaut 22 und dem Vakuumisolationselement 21 umschlossene Hohlraum 23 ist im Stadium der Fig. 10 noch leer, sodass eine von einer horizontalen Stirnseite der Tür aus in den Hohlraum 23 vorspringende Lagerbuchse 24 eines Türscharniers in ihm sichtbar ist. Der Hohlraum 23 ist vorgesehen, um darin anschließend in an sich bekannter Weise, z.B. durch Ausschäumen mit Polyurethan, einen weiteren Dämmkörper zu bilden. Im Vergleich zu einer herkömmlichen, vollständig ausgeschäumten Kältegerätetür können mit der erfindungsgemäßen Tür jedoch überlegene Dämmwerte erreicht werden, da diejenigen Bereiche der Tür, die vorgesehen sind, um in die Lagerkammer eines die Tür verwendenden Kältegerätes einzugreifen, namentlich der Hohlraum 13 und die Holme 15, vollständig vakuumisoliert sind.

Eine noch stärkere Wärmedämmung ist mit der in Fig. 11 in einem zu Fig. 10 analogen Teilschnitt gezeigten Kältegerätetür erreichbar. Bei dieser Ausgestaltung ist die Menge des verwendeten Stützmaterials größer, als der Hohlraum 13, selbst nach Verdichten des Stützmaterials, aufzunehmen vermag. Anstelle des flachen Stempels 18 ist zum Verdichten des Stützmaterials ein leicht konkaver Stempel verwendet, um am Rand des Hohlraums 12 eine mit 25 bezeichnete, sanft ansteigende Querschnittskontur des Füllmaterials zu erhalten, die es erlaubt, die Folie 19 auf den Flansch 16 und die Beutel 14 aufzulegen und am Flansch 16 zu verschweißen, ohne dabei die Beutel 14 zu verformen.

## Patentansprüche

1. Verfahren zur Fertigung eines Wärmedämmelements mit den Schritten:
- Einfüllen eines schüttfähigen porösen Stützmaterials in einen Behälter (11),
- Evakuieren des Behälters (11),
- Versiegeln des evakuierten Behälters (11), um ein Vakuumisolationselement (21) zu erhalten,
**dadurch gekennzeichnet, dass** das Stützmaterial in den als Innenwand einer Kältegerätetür mit Holmen (15) geformten Behälter (11) in in luftdurchlässige Beutel (14) vorverpackter Form eingefüllt wird, um einen Hohlraum (13) des Behälters (11) bis in die Holme (15) hinein auszufüllen, indem der Hohlraum (13) mit einer Vielzahl von kleinen Beuteln (14) aufgefüllt wird.

2. Verfahren nach Anspruch 1, mit dem weiteren Schritt
- Verdichten des Stützmaterials im Behälter (11).

3. Verfahren nach Anspruch 1 oder 2, **dadurch gekennzeichnet, dass** der Behälter (11) starrwandig ist.

4. Verfahren nach einem der vorhergehenden Ansprüche, mit dem Schritt des Erzeugens des Behälters (11) durch Tiefziehen.

5. Verfahren nach einem der vorhergehenden Ansprüche, **dadurch gekennzeichnet, dass** beim Versiegeln ein Deckel (19) an dem Behälter (11) angebracht wird.

6. Verfahren nach Anspruch 5, **dadurch gekennzeichnet, dass** beim Versiegeln der Deckel (19) an einen umlaufenden Flansch (16) des Behälters (11) angeschweißt wird.

7. Verfahren nach Anspruch 6, **dadurch gekennzeichnet, dass** der umlaufende Flansch (16) nach dem Versiegeln beschnitten wird.

8. Verfahren nach Anspruch 5, 6 oder 7, **dadurch gekennzeichnet, dass** der Deckel (19) nachgiebiger als der Behälter (11) ist.

9. Verfahren nach einem der vorhergehenden Ansprüche, **dadurch gekennzeichnet, dass** das Vakuumisolationselement (21) mit wenigstens einem weiteren Dämmkörper zusammengefügt wird, um das Wärmedämmelement zu bilden.

10. Verfahren nach Anspruch 9, **dadurch gekennzeichnet, dass** wenigstens zwei einander gegenüberliegende Oberflächen (26) des Behälters (11) am Wärmedämmelement freiliegen.

11. Verfahren nach einem der vorhergehenden Ansprüche, **dadurch gekennzeichnet, dass** das Wärmedämmelement die Tür eines Haushaltskältegeräts ist.

12. Wärmedämmelement mit einem evakuierten und versiegelten, mit einem schüttfähigen porösen Stützmaterial gefüllten Behälter (11), **dadurch gekennzeichnet, dass** das Stützmaterial in dem als Innenwand einer Kältegerätetür mit Holmen (15) geformten Behälter (11) in mehrere luftdurchlässige Beutel (14) vorverpackt ist um einen Hohlraum (13) des Behälters (11) bis in die Holme (15) hinein auszufüllen, indem der Hohlraum (13) mit einer Vielzahl von kleinen Beuteln (14) aufgefüllt ist.

13. Wärmedämmelement nach Anspruch 12, **dadurch gekennzeichnet, dass** der Behälter (11) starrwandig ist.

14. Wärmedämmelement nach Anspruch 12 oder 13, **dadurch gekennzeichnet, dass** der Behälter (11) durch einen Deckel (19) verschlos und dass der Deckel (19) nachgiebiger als der Behälter (11) ist.

15. Haushaltskältegerät mit einem Wärmedämmelement nach einem der Ansprüche 12, 13 oder 14.

16. Haushaltskältegerät, nach Anspruch 15, **dadurch gekennzeichnet, dass** der Behälter (11) eine einer Lagerkammer zugewandte Wand des Gehäuseteils bildet.

## Claims

1. Method for manufacturing a thermal insulation element comprising the steps of:
- Filling a free-flowing porous support material into a container (11),
- Evacuating the container (11),
- Sealing the evacuated container (11), in order to obtain a vacuum insulation element (21),
**characterised in that** the support material is filled into the container (11) formed as an inner wall of a refrigeration device door with stays (15) in the form of pre-packed air-permeable bags (14), in order to fill a hollow space (13) of the container (11) up to the stays (15), by filling the hollow space (13) with a plurality of small bags (14).

2. Method according to claim 1, comprising the further step
- Compressing the support material in the container (11).

3. Method according to claim 1 or 2, **characterised in that** the container (11) has rigid walls.

4. Method according to one of the preceding claims, comprising the step of producing the container (11) by deep drawing.

5. Method according to one of the preceding claims, **characterised in that** during sealing, a lid (19) is placed on the container (11).

6. Method according to claim 5, **characterised in that** during sealing the lid (19) is welded onto a circumferential flange (16) of the container (11).

7. Method according to claim 6, **characterised in that** the circumferential flange (16) is trimmed after the sealing.

8. Method according to claim 5, 6 or 7, **characterised in that** the lid (19) is more flexible than the container (11).

9. Method according to one of the preceding claims, **characterised in that** the vacuum insulation element (21) is combined with at least one other insulating body in order to form the thermal insulation element.

10. Method according to claim 9, **characterised in that** at least two opposing surfaces (26) of the container (11) are exposed at the thermal insulation element.

11. Method according to one of the preceding claims, **characterised in that** the thermal insulation element is the door of a domestic refrigeration device.

12. Thermal insulation element comprising an evacuated and sealed container (11) filled with a free-flowing porous support material, **characterised in that** the support material is pre-packed into several air-permeable bags (14) in the container (11) formed as an inner wall of a refrigeration device door with stays (15), in order to fill a hollow space (13) of the container (11) up to the stays (15), by filling the hollow space (13) with a plurality of small bags (14).

13. Thermal insulation element according to claim 12, **characterised in that** the container (11) has rigid walls.

14. Thermal insulation element according to claim 12 or 13, **characterised in that** the container (11) is closed by a lid (19) and **in that** the lid (19) is more flexible than the container (11).

15. Domestic refrigeration device having a thermal insulation element according to one of claims 12, 13 or 14.

16. Domestic refrigeration device according to claim 15, **characterised in that** the container (11) forms a wall of the housing part facing a storage chamber.

## Revendications

1. Procédé de fabrication d'un élément d'isolation thermique, comprenant les étapes :
- remplissage dans un réservoir (11) d'une matière de support poreuse déversable,
- mise sous vide du réservoir (11),
- scellement du réservoir (11) mis sous vide, afin d'obtenir un élément d'isolation par vide (21),
**caractérisé en ce que** la matière de support est remplie dans le réservoir (11) formé comme paroi intérieure d'une porte d'appareil frigorifique comprenant des longerons (15), sous forme préemballée dans des sachets (14) perméables à l'air, afin de remplir un espace creux (13) du réservoir (11) jusqu'à l'intérieur des longerons (15), du fait que l'espace creux (13) est rempli avec une pluralité de petits sachets (14).

2. Procédé selon la revendication 1, comprenant l'étape supplémentaire
- compression de la matière de support dans le réservoir (11).

3. Procédé selon la revendication 1 ou 2, **caractérisé en ce que** le réservoir (11) est à parois rigides.

4. Procédé selon l'une quelconque des revendications précédentes, comprenant l'étape de la réalisation du réservoir (11) par emboutissage.

5. Procédé selon l'une quelconque des revendications précédentes, **caractérisé en ce qu'**un couvercle (19) est placé sur le réservoir (11) lors du scellement.

6. Procédé selon la revendication 5, **caractérisé en ce que** lors du scellement, le couvercle (19) est soudé sur une bride périphérique (16) du réservoir (11).

7. Procédé selon la revendication 6, **caractérisé en ce que** la bride périphérique (16) est coupée après le scellement.

8. Procédé selon la revendication 5, 6 ou 7, **caractérisé en ce que** le couvercle (19) est plus souple que le réservoir (11).

9. Procédé selon l'une quelconque des revendications précédentes, **caractérisé en ce que** l'élément d'isolation par vide (21) est assemblé à au moins un corps d'isolation supplémentaire afin de former l'élément d'isolation thermique.

10. Procédé selon la revendication 9, **caractérisé en ce qu'**au moins deux surfaces (26) du réservoir (11), opposées les unes aux autres, sont à découvert sur l'élément d'isolation thermique.

11. Procédé selon l'une quelconque des revendications précédentes, **caractérisé en ce que** l'élément d'isolation thermique est la porte d'un appareil frigorifique à usage domestique.

12. Elément d'isolation thermique comprenant un réservoir (11) vidé d'air et scellé, rempli avec une matière de support poreuse déversable, **caractérisé en ce que** la matière de support est préemballée dans le réservoir (11) formé comme paroi intérieure d'une porte d'appareil frigorifique comprenant des longerons (5), dans plusieurs sachets (14) perméables à l'air, afin de remplir un espace creux (13) du réservoir (11) jusqu'à l'intérieur des longerons (15), du fait que l'espace creux (13) est rempli avec une pluralité de petits sachets (14).

13. Elément d'isolation thermique selon la revendication 12, **caractérisé en ce que** le réservoir (11) est à parois rigides.

14. Elément d'isolation thermique selon la revendication 12 ou 13, **caractérisé en ce que** le réservoir (11) est fermé par un couvercle (19) et **en ce que** le couvercle (19) est plus souple que le réservoir (11).

15. Appareil frigorifique à usage domestique muni d'un élément d'isolation thermique selon l'une quelconque des revendications 12, 13 ou 14.

16. Appareil frigorifique à usage domestique selon la revendication 15, **caractérisé en ce que** le réservoir (11) forme une paroi, tournée vers une chambre de stockage, de la partie de boîtier.
